# EUROPEAN PATENT APPLICATION

(11) **EP 4 480 921 A1**
(43) Date of publication of application: **25.12.2024**
(21) Application number: 23305975.7
(22) Date of filing: 20.06.2023
(51) Int. Cl.: C01G 43/00

(54) **PROCESS FOR THE HYDROTHERMAL CONVERSION OF URANIUM OXIDES INTO NANOCRYSTALLINE URANIUM DIOXIDE**

(71) Applicant: Orano, 92320 Chatillon (FR); Centre National de la Recherche Scientifique, 75016 Paris (FR); Université de Lille, 59800 Lille (FR); Centrale Lille Institut, 59651 Villeneuve-d'Ascq (FR); Université d'Artois, 62030 Arras (FR)
(72) Inventor: BAUMANN, Viktoria, 69123 HEIDELBERG (DE); RIVENET, Murielle, 59780 BAISIEUX (FR); MOREL, Bertrand, 77210 AVON (FR)
(74) Representative: Lavoix

(57) **Abstract**

The present invention concerns the preparation of crystalline nanoparticles of uranium dioxide and hyper-stoichiometric uranium dioxide by hydrothermal conversion of an uranium oxide, the nanocrystalline particles obtainable therefrom and the use of the process for tuning the size and morphology of uranium oxide and hyper-stoichiometric uranium dioxide.

## Description

### Technical field

The present invention relates to the field of nuclear energy, and more particularly the production and recycling of uranium oxides.

More particularly, it relates to a method for producing uranium dioxide nanoparticles with a controlled morphology.

### State of the prior art

Uranium dioxide (UO₂) is the most used nuclear fuel in light water reactors (LWR). Uranium dioxide naturally occurs in the mineral uraninite.

UO₂ may accommodate excess oxygen atoms as interstitial defects and forms a series of hyper-stoichiometric phases with a general formula of UO₂₊ₓ (0≤x<0.25). In particular, the UO_{2.12} oxide phase is energetically favorable and is believed to influence the fuel properties, including thermal conductivity, fission product diffusion, high burn-up structure, and corrosion behavior.

Triuranium octoxide (U₃O₈) is the most stable uranium oxide. It may be naturally present in uraninite, and is one of the more popular forms of uranium concentrate powder obtained in the processing of uranium ores, after it has been mined and before uranium enrichment and fuel fabrication. It is also used for safe and stable storage for example after enrichment operation, for depleted uranium or after reprocessing of used fuel prior to subsequent reuse in the manufacture of UO₂ or MOX fuel.

Increasing attention is also given to the preparation and characterization of uranium nanomaterials whose nanoscale properties could improve, for instance, the preparation, flowing, burning such as calcination or sintering, storing and reprocessing of nuclear fuel.

It is known that actinide oxide and actinide mixed oxide nanocrystals can be obtained by hydrothermal decomposition of actinide oxalates: Manaud & al. Inorganic Chemistry 2020, 59, 3260-3273 and Popa & al. CrystEngComm 2018, 20, 4614 disclose the formation of uranium oxides by hydrothermal conversion of uranium(IV) oxalate.

Still, it is desirable to directly convert uranium oxides in the solid form into nanoparticles of UO₂₊ₓ, with a controlled shape and size.

The preparation of UO₂ faces the management of uranium scraps which typically involves heavy recycling steps: the pellets are crushed and then dissolved, and UOa or uranate is re-precipitated, calcined and then reduced to sinterable UO₂. This involves a number of stages and, above all, the effluents (often nitrates) have to be treated.

It is thus desirable to provide sinterable UO₂ in a more straightforward process.

Salikhov & al. International Journal of Thermophysics, 26 (4) (2005) 1215-1228 discloses the direct conversion of UO₂ into UO₂₊ₓ nanoparticles (NPs). The disclosed process implies the use of uranium oxide sintered pellets of 97% theoretical density (9 mm diameter and 2 mm thickness) and its heating by a focused powerful CO₂ laser beam (1000 W power working in a continuous regime). The pellet is placed on a water cooling holder, in a chamber. To reduce sample evaporation during the measurements, an excess pressure of a pure inert gas (Argon) is maintained. UO₂₊ₓ nanoparticles are obtained thanks to the condensation of an oversaturated vapour above the sample surface in laser evaporation, the sizes of the droplets depending on the power of laser radiation and the pressure of the inert gas. Thus, this is a multistep process which requires to shape the uranium oxide powder into a sintered pellet. It also requires the use of a 1000 W laser beam which is energy intensive and expensive to implement. Also, since the formation of UO₂₊ₓ nanoparticles occurs through the condensation of a vapour oversaturated in uranium, the size of the droplets needs to be carefully controlled. This is done by means of the power of laser radiation and the pressure of the inert gas: this remains difficult to implement at an industrial scale. At last but not least, the yield of conversion of UO₂ into nanoparticles of UO₂₊ₓ remains well below to 100% as the surface area heated by the focused laser beam is 1 mm² whereas the pellet has a 9 mm diameter.

It thus remains desirable to provide an efficient and industrially scalable process for the direct conversion of uranium oxides into UO₂₊ₓ nanoparticles (NPs).

### Description of the invention

One aim of the invention is to allow the industrialization of the production of UO₂₊ₓ nanoparticles, by reducing the steps required for the production of UO₂₊ₓ nanoparticles from uranium oxides powders.

In particular, it aims at converting solid uranium oxides without requiring any prior treatment of the powder.

A further aim is also to control the size of the crystalline nanoparticles by a versatile process.

A still further objective is to provide an improved process to recycle uranium side products of the uranium fuel production, including the straightforward processing of uranium oxide scraps products generated by the uranium fuel production.

The present invention allows to directly convert uranium oxide powders, such as UO₂ and UsOs, into crystalline uranium dioxide nanoparticles, UO₂₊ₓ.

Thus, according to a first object, the present invention is directed to a process for the hydrothermal conversion of a uranium oxide into nanocrystalline uranium dioxide of formula (I)

UO₂₊ₓ (I)

where 0≤x<0,25,
said process comprising :
(i) Adding said uranium oxide, a carbonate salt, hydrogen peroxide, oxalic acid and a reducing agent to water to form an aqueous solution, and
(ii) Heating said mixture at a temperature comprised between 90°C and 250°C, under pressure.

The term "uranium dioxide" as used herein refers to the compound of formula (I)

UO₂₊ₓ (I)

where 0≤x<0,25,
which thus includes hyper-stoichiometric uranium dioxide, where 0<x<0.25.

Uranium oxides may reflect the various oxidation states of uranium and include uranium dioxide (or uranium(IV) oxide, \UO₂), diuranium pentoxide (or uranium(V) oxide, U₂O₅), uranium trioxide (or uranium(VI) oxide, UO₃), triuranium octoxide (U₃O₈), uranyl peroxide (UO₂O₂ or UOa), or amorphous uranium(VI) oxide (*am*-U₂O₇).

According to a particular embodiment, said uranium oxides may be chosen from uranium dioxide (UO₂), uranium trioxide (or uranium(VI) oxide, UO₃), and triuranium octoxide (U₃O₈), or a mixture thereof.

Said uranium oxides may be amorphous or crystalline. It may be typically in the form of a ceramics of powder such as a free-flowing powder or compacted powder.

It is being understood that the process may comprise a preliminary step of mechanically grinding the uranium oxide e.g. where said uranium oxide is in the form of a ceramics and/or to achieve a powder of the desirable granulometry.

"Nanocrystalline uranium dioxide" refers to uranium dioxide of formula (I) above in the form of crystalline nanoparticles.

The term "nanoparticle" (or NP) generally refers to a particle that is less than 1000 nm in diameter.

Typically, nanocrystalline UO₂₊ₓ has a cubic structure of the fluorite type and crystallizes in the space group Fm-3m (225).

According to an embodiment, the crystalline nanoparticles of the invention are composed of crystallites. Typically, said crystallites assemble in an isotropic fashion. Therefore, the shape of the crystalline nanoparticles does generally not depend on direction. Typically, said crystalline nanoparticles have a substantially spherical morphology.

According to an embodiment, the crystallites have a mean diameter comprised between between 1 and 100 nm, particularly less than 80 nm, more preferably less than 60 nm in diameter.

Said mean diameter is understood in number (frequency).

According to an embodiment, nanometric uranium dioxide as prepared by the process of the invention is in the form of a powder that is sinterable, particularly sinterable at lower temperatures.

When used as a starting product, said uranium oxide typically has an anisotropic morphology.

For example, said uranium dioxide typically has a needle-shaped morphology.

The process of the invention not only allows to convert an uranium oxide to uranium dioxide, but also allows the conversion of the particles morphology from anisotropic to isotropic nanoparticles.

According to the invention, the size of the nanoparticles may be controlled and adjusted by varying the reactional conditions, such as the temperature, pH, and/or duration of the reaction.

According to the invention, the reaction of said uranium oxide with a carbonate salt and hydrogen peroxide in water consists in an oxidative dissolution of uranium in the aqueous solution, whereas the carbonate salt further exhibits a complexing and basifying action.

As used herein the term "carbonate salt" refers to the salt formed by a carbonate anion with a suitable cation such as ammonium (NH₄⁺) or a cation of an alkali metal, such as sodium (Na⁺) or potassium (K⁺).

According to an embodiment, said carbonate salt is ammonium carbonate ((NH₄)₂CO₃) as NH₄⁺ is thermally labile.

According to an embodiment, an aqueous solution of ammonium or of alkali carbonate may be used as a source of carbonate salt in the process of the invention. Variously concentrated ammonium or alkali carbonate solutions may be used.

Hydrogen peroxide refers to the compound with the formula H₂O₂ and is typically used as an oxidant. According to an embodiment, as aqueous solution of hydrogen peroxide may be used as a source of hydrogen peroxide in the process of the invention. Variously concentrated hydrogen peroxide solutions may be used.

Typically, hydrogen peroxide and carbonate salt may be used in excess with respect to the uranium oxide.

Step (i) typically involves the addition of said uranium oxide to an aqueous mixture comprising an aqueous solution of said carbonate salt and an aqueous solution of hydrogen peroxide.

Oxalic acid dihydrate may be conveniently used as a source of oxalic acid.

Said reducing agent may be chosen from hydrazine, hydroxylammonium nitrate (NHA) and their mixtures.

Hydrazine monohydrate may be suitably used as a source of hydrazine.

It is to be understood that the term "reducing agent" encompasses said reducing agent or a source thereof.

Under the combined action of carbonate salt and hydrogen peroxide, uranium oxide dissolves into water. It may be also oxidized, depending on its initial oxidation state in the starting uranium oxide. For example, in the case of uranium dioxide or triuranium octoxide, uranium is dissolved and actually oxidized into uranium(VI). In the case of uranium(VI) trioxide, uranium(VI) is already present and is readily dissolved.

Without being bound by theory, it is believed that uranium(VI) is first dissolved in water and then reduced by reacting with oxalic acid and said reducing agent.

The process may thus include the addition of oxalic acid dihydrate and said reducing agent either at the same time as said uranium oxide, said carbonate salt and hydrogen peroxide, or after oxidative dissolution of uranium.

According to an embodiment, the reagents may thus be added in sequence, where step (i) involves a first adding step of adding uranium oxide, carbonate salt and hydrogen peroxide to water, followed by a second adding step of adding oxalic acid and the reducing agent to said aqueous solution.

According to this embodiment, the source of oxalic acid and the reducing agent are added to the reactional mixture only after the oxidative dissolution has been satisfyingly performed.

The dissolution may be considered as satisfyingly performed when uranium has been fully dissolved or has been dissolved to an extent that is considered suitable or acceptable. The second adding sequence may be carried out between few minutes to few hours after the first adding sequence.

Alternatively, according to a preferred embodiment, all reagents (oxalic acid, the reducing agent, uranium oxide, carbonate salt and hydrogen peroxide) are simultaneously added to water, by contacting together all reactants.

This alternative may be suitable when *inter alliae* the starting uranium oxide comprises uranium dioxide. According to this alternative, the process includes contacting said uranium oxide comprising UO₂ with a source of carbonate salt, a source of hydrogen peroxide, a source oxalic acid and said reducing agent in water. Accordingly, the reduction will occur once uranium(VI) is dissolved in water.

Step (i) may be conducted over a wide range of temperatures, typically at room temperature.

According to the invention, step (ii) is conducted under heating, typically at a temperature comprised between 90°C and 250°C, preferably comprised between 90°C and 200°C.

It has been shown that a higher temperature of the contacting step ii) may lead to an increase of the average size of the crystallite.

According to the invention, step (ii) is conducted under pressure. A suitable pressure may be achieved by autogenous pressure generated by the reactional mixture itself when the process is conducted in a sealed reactor.

According to an embodiment, the process may thus be adequately conducted in a heated autoclave.

Typically, the reactants (carbonate salt, hydrogen peroxide, oxalic acid and reducing agent) are used in excess with respect to the quantity of uranium that is present in the amount of uranium oxide that is reacted.

The process may be conducted without pH adjustment which is naturally alkaline.

According to an embodiment, the process may further comprise the step of adjusting the pH.

According to an embodiment, the pH of the solution may be adjusted between 6 and 11, typically between 6.5 and 9. The pH adjustment may be particularly useful to tune the size of the nanoparticles that is desired and/or the morphology of the aggregates in to which they assemble.

Without being bound by any theory, it has been shown that the average size of the crystalline nanoparticles increases when the pH decreases.

The pH may typically be acidified by adding a strong or weak acid to the reaction mixture, such as an aqueous solution of nitric acid, e.g. HNOs 2M, or hydrochloric acid.

The contacting steps may be conducted over a wide range of duration, typically over a duration that is sufficient to achieve the yield, such as between few minutes and several days. The duration may also be conveniently adjusted to tune the morphology of the obtained product. It has been hypothesized that the duration may affect the way obtained nanoparticles may assemble to form aggregates, where higher duration may lead to bigger aggregates.

The obtained product may typically precipitate form the reactional mixture.

According to an embodiment, the process may thus further comprise one or more additional steps for recovering the desired nanocrystalline particles of uranium dioxide that are formed. Such recovery steps may be chosen from separating, washing and drying said uranium dioxide that precipitates from the reactional mixture.

Separation may be done by centrifugation and/or filtration of the precipitate.

Washing may be conveniently achieved by rinsing the separated product, with water or ethanol, or a mixture thereof.

Drying may typically be done according to any known procedures.

According to a further object, the present invention also concerns the nanocrystalline particles of uranium dioxide of formula (I)

UO₂₊ₓ (I)

where 0≤x<0,25,
and wherein said particles have a spherical shape.

The nanocrystalline particles are typically composed of crystallites which generally have a mean diameter comprised between 1 and 100 nm, particularly less than 80 nm, more preferably less than 60 nm in diameter.

Typically, said nanocrystalline particles are obtained by the process of the invention.

According to an embodiment, one or more of the nanocrystalline particles and/or crystallites of the invention may assemble in larger aggregates. Such aggregates are also encompassed by the present invention.

Typically, said aggregates have an average size of less than 10 µm, typically less than 5 µm, in particular ranging from 500 nm to 5 µm.

It is believed that the process of invention ensures the synthesis of nanocrystalline uranium dioxide of high purity, in particular with a low residual carbon content due to the most complete oxalate degradation through heating (step ii) of the process).

According to an embodiment, the nanocrystalline particles according to the invention exhibit a residual carbon content of less than 1.5% (in weight), preferably less than 1%, more preferably less than 0.5%, still more preferably less than 0.3% (in weight).

According to a still further object, the present invention also concerns a process for controlling the size of nanocrystalline particles of uranium dioxide of formula (I)

UO₂₊ₓ (I)

where 0≤x<0,25,
and/or their aggregates,
said process comprising conducting the hydrothermal conversion process of the invention and
further adjusting one or more of the parameters chosen from the pH of the reactional mixture, the temperature and the duration of the reaction.

The pH adjustment may be obtained by acidifying the reactional mixture, for example by adding a suitable amount of an acidic solution, such as a nitric acid solution or a hydrochloric acid.

According to an embodiment, the process may include the step of adding an acidic solution to increase the average size of the crystallite.

According to an embodiment, the process may include the step of extending the duration of the contacting step ii) to increase the size of the aggregates formed by said crystalline particles.

According to an embodiment, the process may include the step of increasing the temperature of the contacting step ii) to increase the average size of the crystallite.

According to a further object, the present invention also concerns a recycling process of uranium, said process comprising conducting the hydrothermal conversion of the invention on a uranium oxide generated as scraps from uranium fuel production.

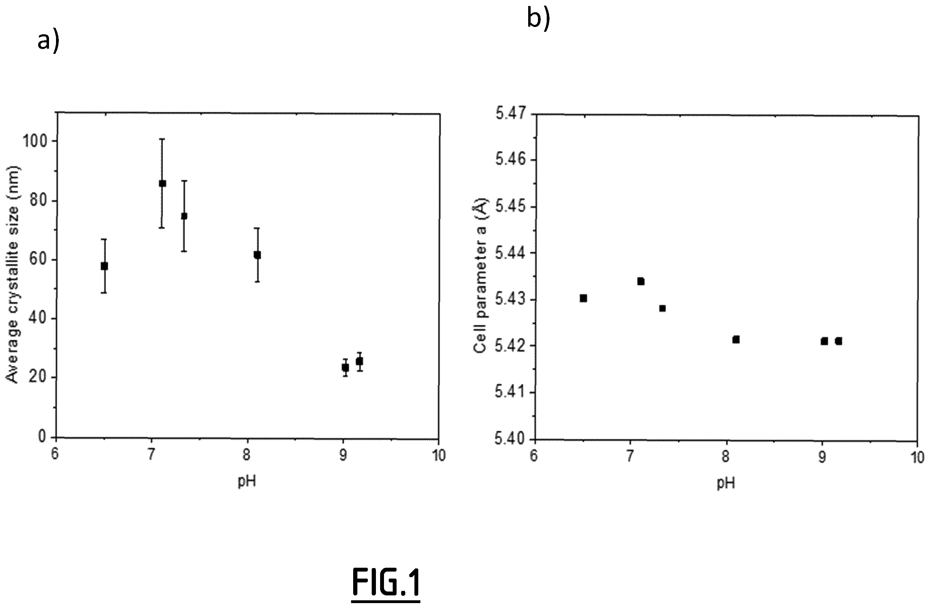

Other features and embodiments of the invention will become apparent by reference to the following appended figures 1 to 11, which relate to illustrative examples of the process of the invention. It is to be understood that these examples are solely given to illustrate the subject of the invention and do not in any manner limit its subject matter.

### Brief description of the drawings

Figure 1 illustrates the evolution of the average crystallite size (A) and cell parameter a (B) of uranium oxide after hydrothermal treatment (T = 170 °C, t = 12 h) as a function of the pH of the initial mixture.
Figure 2 shows the SEM images of uranium dioxide synthesized by hydrothermal treatment of UO₂ (T = 170 °C, t = 12 h) at various pH value and the untreated original UO₂ precursor as reference.
Figure 3 shows the evolution of the average crystallite size (left) and cell parameter a (right) of uranium oxide after hydrothermal treatment (T = 170 °C, t = 12 h) as a function of the pH of the initial mixture.
Figure 4 represents SEM images of UO₂ powder obtained by hydrothermal conversion of UO₂ at various pH values and duration time between 1 h and 10 h.
Figure 5 illustrates the evolution of the average crystallite size (left) and cell parameter a (right) of uranium oxide after hydrothermal treatment (T = 170 °C, t = 12 h).
Figure 6 represents SEM images of UO₂ powder obtained by hydrothermal conversion of UO₂ with 60 µl (left) and 70 µl hydrazine (right) at pH 6.8 and duration between 1 and 10 hours.
Figure 7 shows the characterization of obtained powder at 250 °C after 12 h by XRD and SEM. A: Evolution of the XRD patterns of powder obtained by hydrothermal treatment of UO₂ at various pH values at 250 °C for 12 h. B: SEM image of powder obtained at pH 8.3. C: Average crystallite size of UO₂₊ₓ after hydrothermal treatment calculated by XRD and D: the refined lattice parameter a.
Figure 8 represents SEM images at two different magnifications of UO₂₊ₓ after hydrothermal transformation of acicular UO₂ powder without oxalic acid (T=170 °C, 5 h).
Figure 9 is a scheme for the procedure of hydrothermal conversion of UsOs into UO₂-NP. Step 1: oxidative dissolution of UsOs and step 2: addition of oxalic acid and hydrazine and the hydrothermal conversion at 170 °C for 18h.
Figure 10 illustrates the recorded XRD patterns of the starting material (UsOs) and of UO₂ obtained by hydrothermal treatment of UsOs at 170 °C for 18 h.
Figure 11 shows the transmission electron micrographs of UO₂ obtained by hydrothermal conversion at 170 °C (A), by thermal conversion at 800 °C (B) and 500 °C (C).

### Examples

### Example 1: Hydrothermal conversion UO₂ into UO₂-NP

### Materials:

- UO₂ with a needle-shaped morphology and a crystallite size of 80 nm was prepared from UsOs provided by ORANO by oxidation to UO₄.4H₂O (studtite) and subsequent reduction to UO₂. This reference sample is named UO₂ reference in the following.
- All reagents used were of analytical grade and listed below:
   - Ammonium carbonate (Acros Organics, extra pure)
   - Oxalic acid dihydrate (Fisher Scientific, >= 99%)
   - Nitric acid (Merck, 65%, for analysis)
   - Hydrazine monohydrate (Alfa Aeser, 98+%)
   - Hydrogen peroxide (Merck, 30%)
- A 25 ml Teflon-lined autoclave reactor Anton Paar was used for hydrothermal synthesis, which consists of two layers, the inner part being a Teflon vessel and the outer part is a stainless steel cylinder screwed tightly.
- The required temperature was achieved with a furnace (Heraeus Function Line UT12P drying oven with air circulation) where the autoclave reactor was inserted.

### Method:

- 50 mg of UO₂ was added to the autoclave reactor which was filled with 3 mL of a 2-molar ammonium carbonate solution, 0.18 mL of a 30% hydrogen peroxide, 46.7 mg of oxalic acid dihydrate and 50 to 70 µl of hydrazine.
- The reactor was tightly sealed under air atmosphere, placed in the furnace and heated from 170 to 250°C for 1h to 12 h. In this setup, not only the temperature but also the autogenous pressure due to the evaporation of the organic compounds in the reactor is used to achieve the conversion.
- The final product was separated from the solution, washed with water and ethanol, and dried under air.
- The pH of the suspension, determined with a pH electrode, was about 9 without any adjustment. Lower pH values were obtained by adding HNOs 2M so as to work in the pH range 6.5 to 9.

### Results:

### Structure and microstructure of the samples

All the XRD patterns of the samples obtained after hydrothermal treatment are typical of UO₂₊ₓ which has a cubic structure of fluorite type and crystallize in the space group Fm-3m (225). No typical features of the U₃O₇ XRD pattern was observed in the samples but the presence of U₄O₉ which crystallizes in a superlattice derived from the fluorite structure cannot be excluded when working with a classical laboratory XRD instrument. All the obtained samples are characterized by their round, spherical shape. The particle size ranged from 6 to 90 nm, depending on the reaction conditions.

### Influence of pH value

The influence of the initial pH of the mixtures on the material properties was investigated at fixed temperature (170°C) and heating time (12 hours). The six samples named A1 to A6 were respectively obtained at the pH values equal to 6.5, 7.1, 7.3, 8.1, 9.0 and 9.2.

The calculated value for the cell parameter a of the obtained samples ranged from 5.42 Å to 5.43 Å (Fig.1B), indicating that the uranium is present as UO₂₊ₓ / U₄O₉.

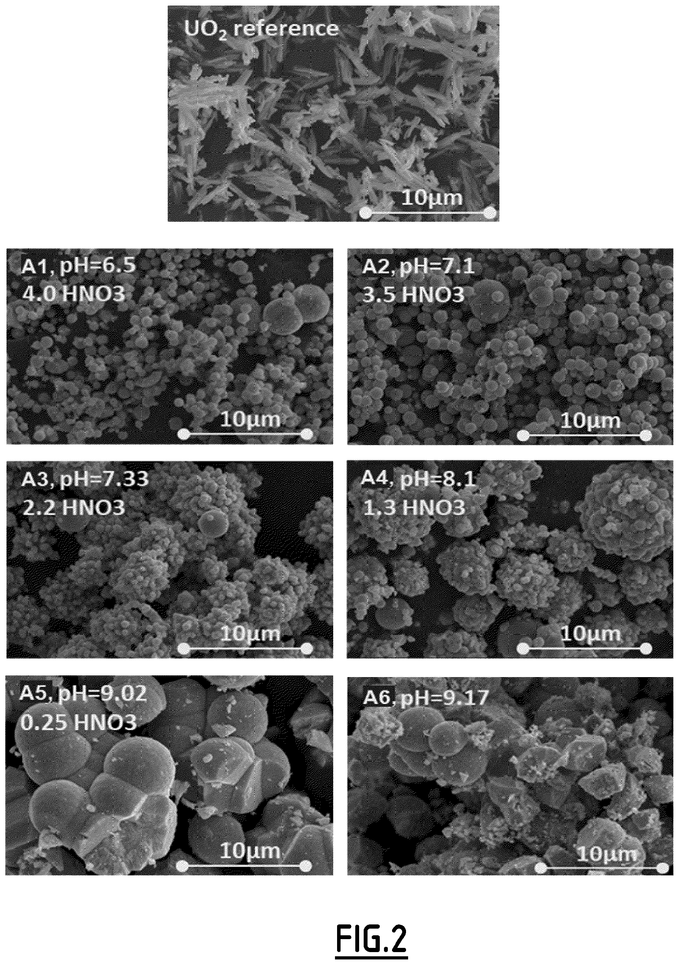

A neutral or slightly basic reaction medium (pH 6.5 - 8) favored crystal growth during hydrothermal treatment and crystallites sizes of 86 nm could be achieved (Fig.1A). These crystallites agglomerate to rather small agglomerates below 1 µm (Fig.2). The yield of conversion under these conditions was about 91 % as shown in Table 1.

If the pH of the starting mixtures is higher than 9, crystallites with a size of less than 20 nm form agglomerates of about 5 µm. The hydrothermal conversion is almost complete under these conditions (99 % conversion).

The amount of residual carbon content is very similar in all obtained samples and is around 0.3 wt% (Table 1):

**Table 1. Properties of UO₂ powder prepared by hydrothermal conversion of UO₂ (T = 170 °C, t = 12 h) for various starting pH values.**

| Sample name | pH value | Particle size (XRD), nm | Yield, % | Carbon content, wt% | HNO₃ 2M, ml |
|---|---|---|---|---|---|
| A1 | 6.5 | 58(3) | 91.2 ± <1 | 0.30 ± 0.01 | 4 |
| A2 | 7.1 | 86(15) | 97.8 ± <1 | 0.27 ± 0.01 | 3.5 |
| A3 | 7.3 | 75(12) | 98.1 ± <1 | 0.31 ± 0.05 | 2.2 |
| A4 | 8.1 | 62(9) | 99.8 ± <1 | 0.26 ± 0.02 | 1.3 |
| A5 | 9.0 | 24(3) | 99.8 ± <1 | 0.28 ± 0.04 | 0.25 |
| A6 | 9.2 | 26(3) | -- | 0.28 ± 0.02 | 0 |

### Influence of duration time and pH

To gain insight the kinetics of the conversion, the influence of the duration of the hydrothermal conversion was investigated in the range from 1h to 10h. Since the pH at the beginning of the conversion has a major influence on the materials properties, it was adjusted with HNOs to pH = 6.5, 8.2, 8.8 and 9. The experiment was performed three times for each reaction condition (except for the reactions at pH = 8.8). To improve the reduction of uranium during conversion, 60 µl of hydrazine was added in this experiment instead of 50 µl. The sample were named B1 to B16.

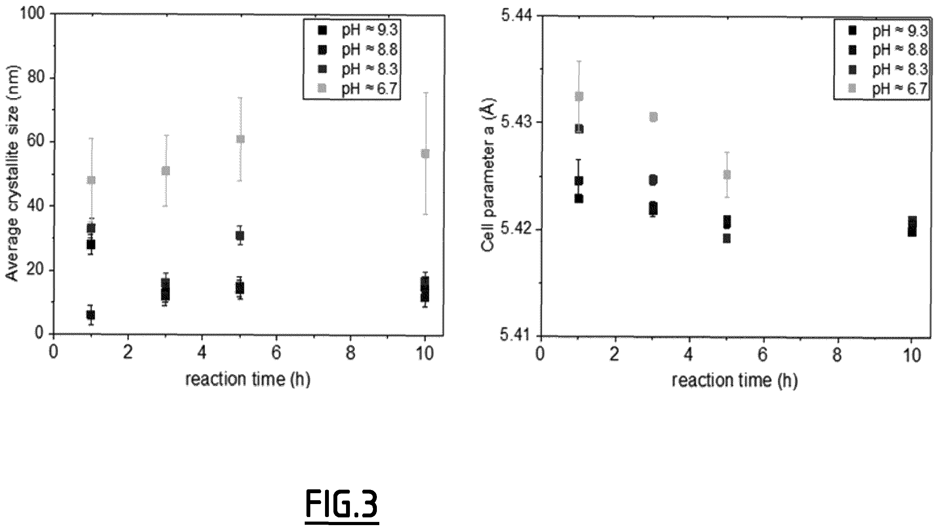

The effect of pH in the initial mixtures on particle size and morphology was confirmed in this series of experiments. As shown in Fig.3, a crystallite size of less than 20 nm was observed for the samples obtained at high pH values.

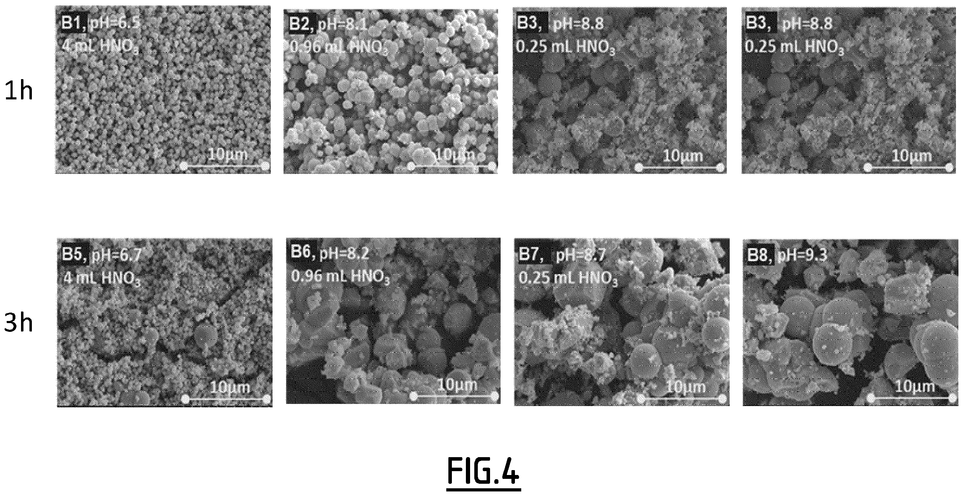

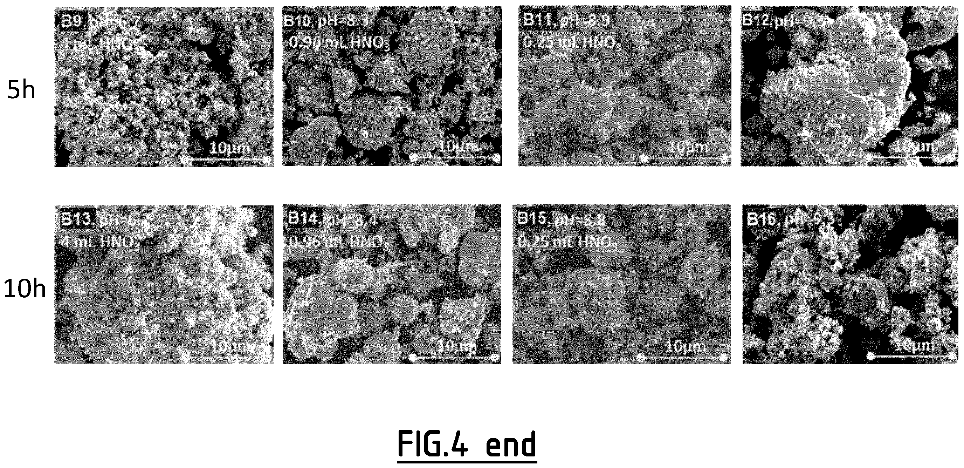

For each pH value, the formed agglomerates appear to be slightly smaller after a reaction time of only one hour than for the analogous powders treated for 3 hours or longer (Fig.4). The yield of the reaction strongly depends on the reaction time (Table 2). UO₂ treated hydrothermally for only one hour was converted preferably between 42 to 95 % (depending on pH), at 3 hours the yield was already above 94 % and above 99 % for longer treatment times. The unconverted uranium remained in solution as U(VI) in dissolved form.

The extremely high values for the residual carbon content in the samples, which range from 0.44 to 1.33 wt.% after one hour of treatment, depending on the pH value, are explained by the fact that the oxalate is not completely decomposed. If the hydrothermal treatment is carried out for longer than three hours, the carbon values are below 0.38 wt.% (except sample B13). It could not be shown that a longer treatment time is associated with a lower residual carbon content.

**Table 2. Properties of UO₂ powder prepared by hydrothermal conversion of UO₂ (T = 170°C) for various starting pH values and duration time.**

| Sample name | pH (average) | Particle size (XRD), nm | Yield, % | Carbon content, wt.% | HNO₃ 2M, ml |
|---|---|---|---|---|---|
| t = 1 h | | | | | |
| B1/B1a/B1 b | 6.7 | 48(13) | 94.5±0.7 | 0.87 ± 0.30 | 4 |
| B2/B2a/Bb | 8.2 | 17(12) | 70.4±21 | 1.33 ± 0.29 | 0.96 |
| B3 | 8.8 | 6(3) | 42.4 | -- | 0.25 |
| B4 B4a/B4b | 9.1 | 16(8) | 85.2±15 | 0.44 ± 0.05 | -- |

| t = 3 h | | | | | |
|---|---|---|---|---|---|
| B5/B5a/B5b | 6.8 | 51(11) | 99.4±0.3 | 0.38 ± 0.05 | 4 |
| B6/B6a/B6b | 8.2 | 17(2) | 99.5±0.2 | 0.28 ± 0.08 | 0.96 |
| B7 | 8.7 | 12(3) | 99.8 | 0.25 ± 0.07 | 0.25 |
| B8/ B8a/B8b | 9.1 | 16(2) | 94.2±6 | 0.28 ± 0.05 | -- |

| t = 5 h | | | | | |
|---|---|---|---|---|---|
| B9/B9a/B9b | 6.7 | 61(13) | 99.8±<1 | 0.36 ± 0.08 | 4 |
| B10/B10a/B10 b | 8.4 | 21(7) | 99.9±<1 | 0.33 ± 0.06 | 0.96 |
| B11 | 8.9 | 15(3) | 99.8 | 0.37 ± 0.05 | 0.25 |
| B12/B12a/B12 b | 9.2 | 15(1) | 99.9±<1 | 0.34 ± 0.09 | -- |

| t=10h | | | | | |
|---|---|---|---|---|---|
| B13/B13a/B13 b | 6.9 | 57(19) | 99.8±<1 | 0.50 ± 0.07 | 4 |
| B14/B14a/B14 b | 8.4 | 24(9) | 99.7±<1 | 0.33 ± 0.07 | 0.96 |
| B15 | 8.8 | 12(3) | 99.8 | 0.26 ± 0.02 | 0.25 |
| B16/B16a/B16 b | 9.2 | 20(9) | 99.9±<1 | 0.33 ± 0.11 | -- |

### Influence of hydrazine

In order to increase the yield of conversion and decrease the amount of U(VI) remaining in solution some experiments were carried out with a hydrazine amount of 60 µl or 70 µl. The pH was about 6.5. With this setting, the UO₂ was hydrothermally reacted at a temperature of 170 °C for a period of 1, 3, 5 and 10 hours. The samples are named C1 to C8 in the following.

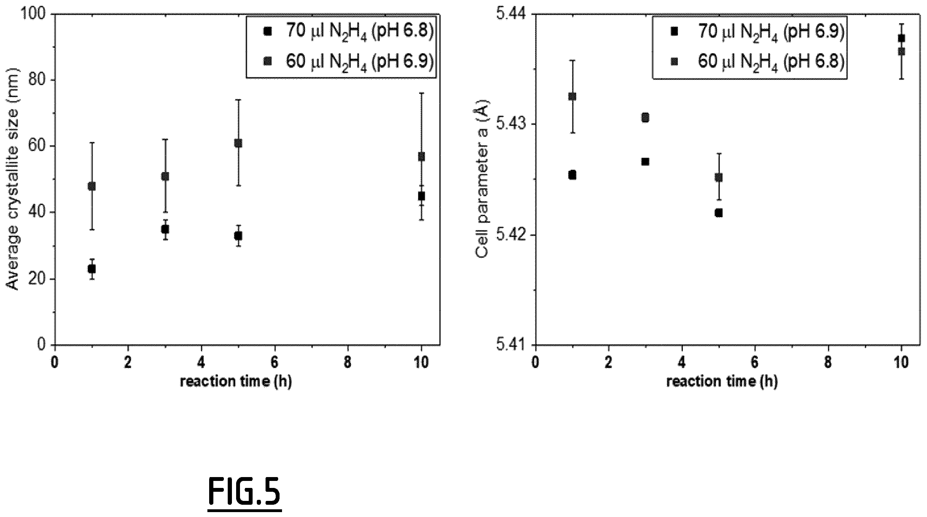

As can be seen in Fig.5, the slightly increased amount of hydrazine leads to smaller crystallites sizes. The cell parameter remains unchanged except for the powder obtained after 10 hours of treatment, namely equal to 5.438(1) Å.

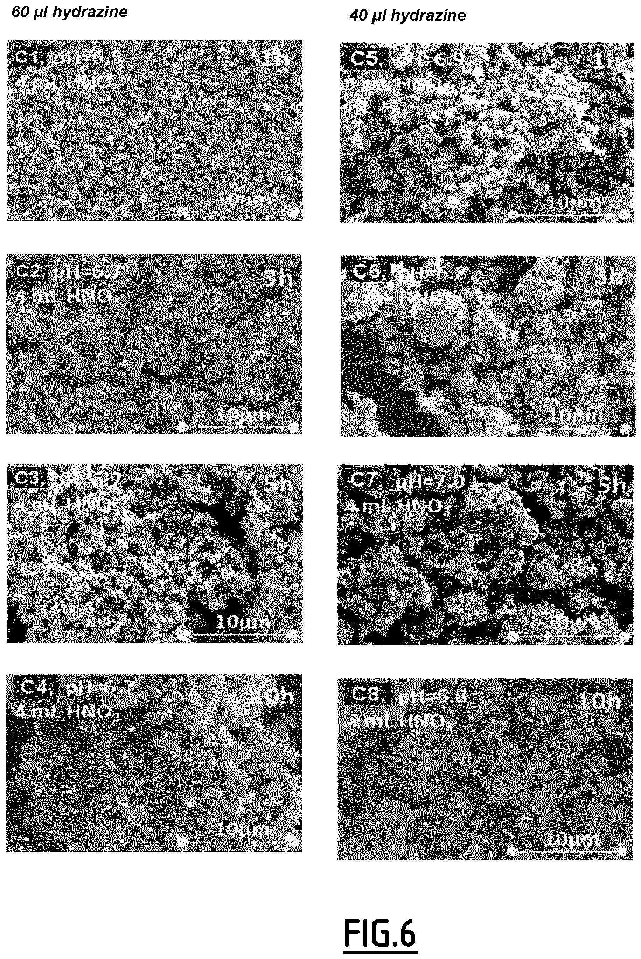

Some structural differences in the shape of the obtained powders are evident when the transformation lasted less than/equal to 3 hours (Fig.6): more hydrazine results in individual particles (agglomerates) no longer being smooth on their round surface, but covered with fringy dust.

### Influence of temperature

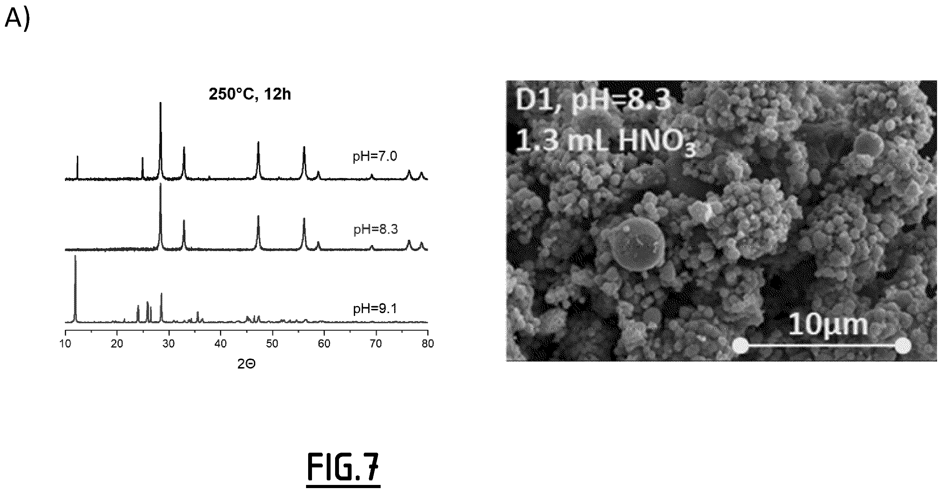

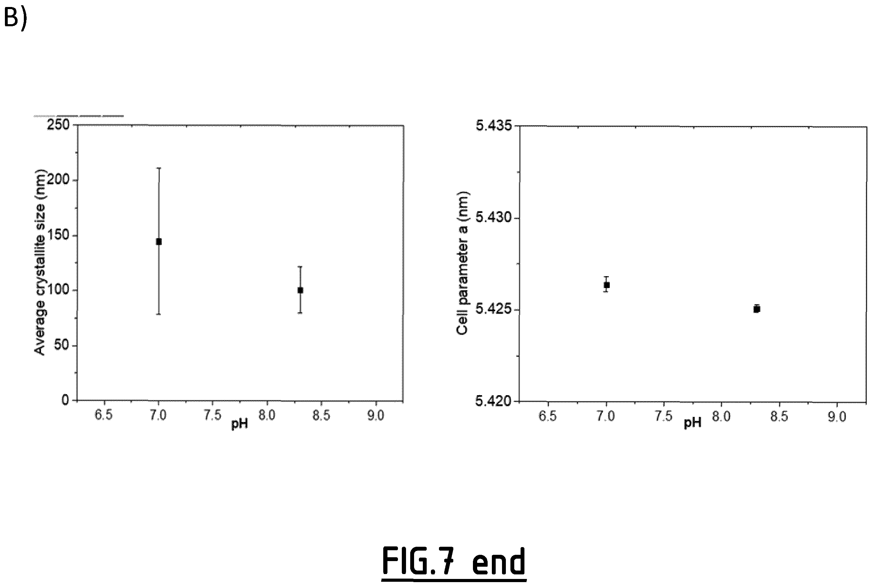

To get a deeper insight into the kinetics, the acicular UO₂ powder was hydrothermally converted at 250°C for 12 h. At the beginning of the reaction, the initial pH values were 7.0, 8.3 and 9.1. The recorded XRD diagram of the samples in Figure 7A shows a pure phase of UO₂/U₄O₉ preferably for the sample converted at pH 8.3, while for other pH values an additional, second phase representing the U₃O₈ was observed, which is undesirable. Figure 7B shows the SEM images of the sample, which is pure UO₂₊ₓ sample. The particle size of the obtained powder was distributed in two sizes. The large particles that have a size of about 5 µm and the smaller particles that are 1 µm small. By means of XRD refinement (Figure 7 C and D), a crystallite size of 100 nm was calculated, which is at the top of the maximum value compared to other samples.

### Influence of oxalic acid

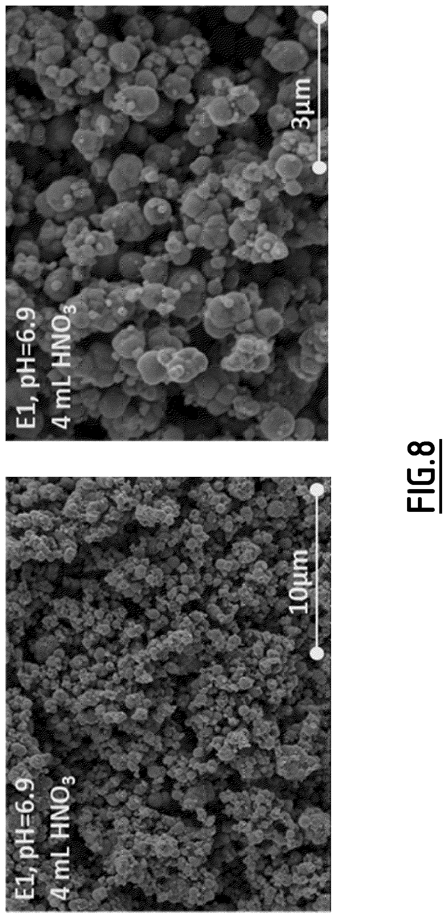

Among other things, it was also investigated whether the absence of oxalic acid has an influence on the system. It was found that UO₂ can be successfully hydrothermally converted at 170°C (5h) to UO₂₊ₓ preferably at pH 6.9. Samples obtained at pH 8.2 and 9.0 were oxidized during the reaction and identified as UsOs by XRD. As can be seen in Figure 8, the positive properties of the powder in terms of morphology are maintained after hydrothermal conversion. The result is spherical particles below 300 nm. The lattice parameter was found around 5.4270(1) and the crystallite size calculated by XRD was 125 nm, while the reference sample had a crystallite size of 80 nm. The oxalic acid probably helps in the formation of nanometric particles and inhibits particle growth.

### Methods for separating the powder from the reaction medium

No significant difference was found when the powder was separated from the reaction solution after the reaction using a paper filter or by centrifugation using a centrifuge.

### Influence of the acid on the pH value adjustment

Experiments were also carried out in which the pH of the reaction medium was adjusted with a 4-molar hydrochloric acid instead of the nitric acid before the reaction. The use of the hydrochloric acid did not significantly affect the conversion or the properties of the powder obtained, but is not desirable in industry.

### Example 2 : Hydrothermal conversion of U₃O₈ into UO₂-NP

### Materials:

The starting material was UsOs powder prepared by oxidation of UO₂ at 800 °C (2 hours, air atmosphere). All reagents used were of analytical grade and listed below:
- Ammonium carbonate (Acros Organics, extra pure)
- Oxalic acid dihydrate (Fisher Scientific, >= 99%)
- Nitric acid (Merck, 65%, for analysis)
- Hydrazine monohydrate (Alfa Aeser, 98+%)
- Hydrogen peroxide (Merck, 30%)
- A 12 mL Teflon-lined autoclave reactor Anton Paar was used for hydrothermal synthesis, which consists of two layers, the inner part being a Teflon vessel and the outer part is a stainless steel cylinder screwed tightly.
- The heating stages were performed by using a heating mantel with built-in thermocouples.

### Method:

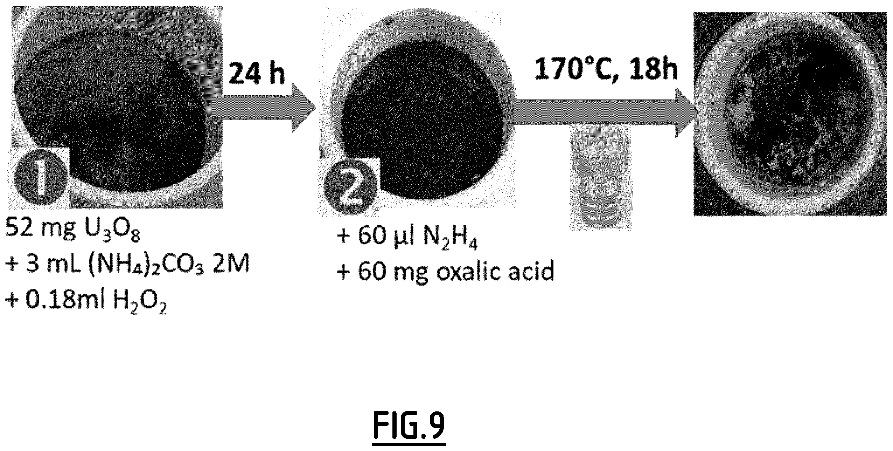

- 52 mg of U₃O₈ was added to the autoclave reactor which was filled with 3 mL of a 2-molar ammonium carbonate solution and 0.36 mL of a 30% hydrogen peroxide (Fig. 9 step 1). The suspension was left 24 hours for the dissolution of UsOs.
- 60 mg of oxalic acid dihydrate and 60 µl of hydrazine was added to the suspension, as shown in Fig. 9 (step 2).
- The reactor was tightly sealed under air atmosphere, placed in the heating mantel and heated at 170°C for 18 h. In this setup, not only the temperature but also the autogenous pressure due to the evaporation of the organic compounds in the reactor is used to achieve the conversion.
- The final product was separated from the solution, washed with water and ethanol, and dried under air.

### Results:

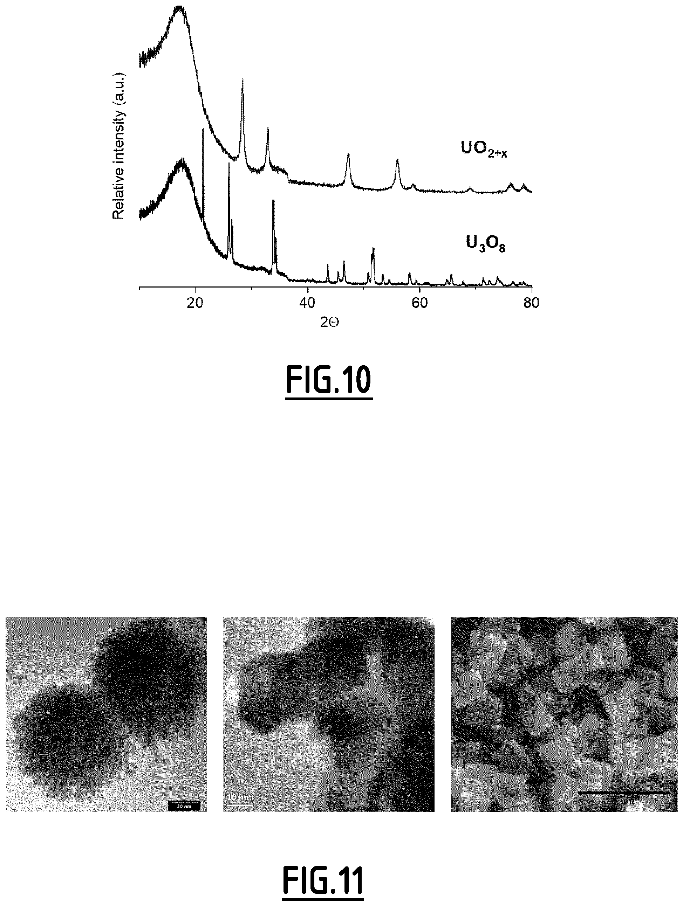

All the XRD patterns (Fig.10) of the sample obtained after hydrothermal treatment are typical of UO₂₊ₓ which has a cubic structure of fluorite type and crystallize in the space group Fm-3m (225). The lattice parameter a is 5.444(4) Å and the crystallite size is 30(6) nm.

### Example 3 : Hydrothermal conversion UO₃

Preliminary studies have confirmed that UOs also dissolves in the reactional conditions of the invention, as follows
[U] = 50 g/L ; [CO₃²⁻]/[U] = 4 ; [H₂O₂]/[U] = 6 ; V = 10 mL
At T = 24.1 °C, pH = 9.71, dissolution was incomplete (fluo X [U] = 45.35 g/L) with a dark red colour that is specific to peroxocarbonate. After 18h : T = 24 °C, pH = 10.57, dissolution was complete (fluo X [U] = 49.75 g/L). The same colour but no precipitation was observed.

Oxalic acid and the reducing agent can then be added.

### Example 4: Comparative studies

At temperature above 600 °C, the agglomeration and growth of nanograined oxide particles can occur which decreases the reactivity of the product [Walter et al. Open. Chem. 14 (2016) 170-174; Martinez & al, J. Eur. Ceram. Soc. 35 (2015) 4535].

As hydrothermal decomposition takes place at lower temperatures (between 90 °C and 250 °C), the particle size is smaller and the surface area larger, which promotes the sinterability by increasing the number of contact points between particles per unit volume [Pope & al J. Nucl. Mater. 52 (1974) 241-254].

A comparison of uranium oxide powder morphology is shown in Fig. 11, for UO₂ obtained by hydrothermal conversion at 170 °C [Balice & al J. Nucl. Mater., 2018, 498, 307-313] (A), by thermal conversion at 800 °C [Tyrpekl & al J. Nucl. Mater. 460 (2015) 200-208] (B) and 500 °C (Martinez & al J. Eur. Ceram. Soc. 35 (2015) 4535).

The hydrothermal decomposition leads to nanocrystalline UO₂ with a spherical shape, while the thermal treatment of oxalates forms platelet-shaped agglomerates not optimal for the sintering behavior [Tyrpekl & al. J. Am. Ceram. Soc. 100 (2017) 1269-1274].

The residual carbon impurity in the oxide powder also play an important role on the oxide final properties since it is expected to delay and/or hinder the sintering process. After thermal decomposition of oxalates, the amount of elemental carbon in the final oxide powder is less than 1 wt.% (less than 3.8 wt.% for COs entities) [Tyrpekl & al. J. Nucl. Mater. 460 (2015) 200-208; Martinez & al J. Eur. Ceram. Soc. 35 (2015) 4535; Vigier & al. J. Alloys Compd., 2007, 444-445, 594-597], while the amount of carbon is found less than 0.3 wt.% after hydrothermal decomposition of uranium oxalate at 170°C for 12 hours. The hydrothermal process appears to be efficient in elimination of carbon despite the lower temperature.

Finally, by allowing the formation of actinide-based nanoparticles the hydrothermal decomposition of actinide oxalate offers the possibility to emulate the typical high burn-up structure (HBS), which is characterized by a porous and nanograined microstructure [Rondinella & al. Mater. Today, 2010, 13, 24-32]. These HBS NPs exhibit closed porosity with better fission gas retention and radiation tolerance, ameliorated mechanical properties, and less detriment of the thermal conductivity upon use [Cappia & al. Progress in Nuclear Energy 72 (2014) 11-16; Zvoriste-Walters & al. J. Nucl. Mater. 435 (1-3) (2013) 123-127], making them an interesting option for new nuclear fuels [Spino & al. J. Nucl. Mater. 422 (1-3) (2012) 27-44].

## Claims

1. Process for the hydrothermal conversion of a uranium oxide into nanocrystalline uranium dioxide of formula (I)
UO₂₊ₓ (I)
where 0≤x<0,25,
said process comprising :
(i) Adding said uranium oxide with a carbonate salt, hydrogen peroxide, oxalic acid and a reducing agent to water to form an aqueous solution, and
(ii) Heating said mixture at a temperature comprised between 90°C and 250°C, under pressure.

2. The process according to claim 1 wherein said uranium oxide is a scrap product generated by uranium fuel production.

3. The process according to claim 1 or 2 wherein said uranium oxide is selected from the group consisting in UO₂, U₃O₈ and UO₃ and mixtures thereof.

4. The process according to anyone of the preceding claims wherein said uranium oxide has an anisotropic morphology.

5. The process according to anyone of the preceding claims wherein in step (i) oxalic acid, the reducing agent, uranium oxide, the carbonate salt and hydrogen peroxide are simultaneously added to water.

6. The process according to anyone of claims 1 to 4 wherein step (i) comprises a first adding step of adding uranium oxide, carbonate salt and hydrogen peroxide to water, followed by a second adding step of adding oxalic acid and the reducing agent to said aqueous solution.

7. The process according to anyone of the preceding claims wherein said reducing agent is chosen from hydrazine, hydroxylammonium nitrate (NHA) and their mixtures.

8. The process according to anyone of the preceding claims which is conducted in a sealed reactor.

9. The process according to claim 8 wherein said pressure is autogenous pressure.

10. The process according to anyone of the preceding claims wherein the pH of the reactional mixture of step (i) is comprised between 6 and 11.

11. The process according to anyone of the preceding claims which further comprises one or more steps chosen from separating, washing and drying the product following step (ii).

12. Nanocrystalline particles of uranium dioxide of formula (I)
UO₂₊ₓ (I)
where 0≤x<0,25,
obtainable by the process according to anyone of the preceding claims, and having a spherical shape.

13. The nanocrystalline particles according to claim 12 which are composed of crystallites which have a mean diameter comprised between 1 and 100 nm, particularly less than 80 nm, more preferably less than 60 nm in diameter.

14. The nanocrystalline particles according to claim 12 or 13 which are assembled into aggregates.

15. The nanocrystalline particles according to claim 12, 13 or 14 having a carbon content of less than 1.5% (in weight).

16. A process for controlling the size of nanocrystalline particles of uranium dioxide of formula (I)
UO₂₊ₓ (I)
where 0≤x<0,25,
and/or their aggregates,
said process comprising conducting the hydrothermal conversion process of the invention and
further adjusting one or more of the parameters chosen from the pH of the reactional mixture, the temperature and the duration of the reaction.

17. A recycling process of uranium, said process comprising conducting the hydrothermal conversion process according to anyone of claims 1 to 11 where said uranium oxide is a scrap from uranium fuel production.
